# EUROPÄISCHE PATENTANMELDUNG

(11) **EP 0 937 976 A2**
(43) Veröffentlichungstag der Anmeldung: **25.08.1999**
(21) Anmeldenummer: 99890018.7
(22) Anmeldetag: 26.01.1999
(51) Int. Cl.: G01N 3/04

(54) **Klemvorrichtung für Zugfestigkeitsprüfgeräte und Verwendung der Klemmvorrichtung an einem automatischen Zugfestigkeitsprüfgerät**

(30) Priorität: 21.02.1998 CH 40998
(71) Anmelder: LENZING AKTIENGESELLSCHAFT, 4860 Lenzing (AT)
(72) Erfinder: Roos, Gerold, 8610 Uster (CH)
(74) Vertreter: Köhler-Pavlik, Johann, Dipl.-Ing.

(57) **Zusammenfassung**

Die Klemmvorrichtung (1) enthält ein Gehäuse (32), eine festen und eine bewegliche Klemmfläche (22, 21), zwischen denen ein Klemmspalt (3) zur Aufnahme eines Prüfguts (2) gebildet ist, und ein Steuerorgan zum Öffnen und Schliessen des Klemmspalts (3). Das Gehäuse (32) ist drehbar gelagert und durch eine ein Drehmoment (Md) erzeugende Zugkraft (Z) des Prüfguts (2) in eine Drehbewegung versetzbar. Es sind Mittel (5, 6, 7) zur Umwandlung dieser Drehbewegung in eine Verschiebung der beweglichen Klemmfläche (21) zur Erzeugung einer zur Zugkraft (Z) proportionalen Klemmkraft (P) vorgesehen. Das Steuerorgan zum Öffnen und Schliessen des Klemmspalts (3) ist durch einen in Verstellrichtung des Klemmspalts (3) längsverschiebbaren Steuerbolzen (5) gebildet. Die Mittel zur Umwandlung der Drehbewegung weisen Kugeln (7) auf, die auf radial zur Verschiebungsrichtung des Steuerbolzens (5) angeordneten Führungen in Form keilförmiger Taschen (19, 20) abrollbar sind.

## Beschreibung

Die Erfindung liegt auf dem Gebiet der Zugfestigkeitsprüfgeräte oder Universalprüfmaschinen zur Messung der Zug- oder Reissfestigkeit von langgestrecktem, elastischem Prüfgut, wie beispielsweise textilen Fäden oder Bändem oder von Drähten. und betrifft eine Klemmvorrichtung für ein solches Prüfgerät oder eine solche Prüfmaschine.

In Zugfestigkeitsprüfgeräten und Universalprüfmaschinen ist für das Festhalten des Prüfguts im Abstand der gewählten Einspannlänge je eine feste und eine vertikal verschiebbare Klemmvorrichtung vorgesehen, die je eine feste und eine bewegliche Klemmfläche und ein Steuerorgan für das Schliessen und Öffnen des zwischen den Klemmflächen gebildeten Klemmspalts aufweisen. An diese Klemmvorrichtungen werden verschiedene, einander teilweise widersprechende Anforderungen gestellt.

Einerseits soll eine genügend grosse Klemmkraft erreicht werden, um das Prüfgut bis zum Bruch ohne Rutschen festzuhalten und andererseits darf der Klemmendruck aber auch nicht zu gross sein, da sonst das Prüfgut zerquetscht und damit geschwächt würde. Diese potentielle Schwächung des Prüfguts soll durch automatische Anpassung der Klemmkraft an die Zugkraft, und/oder durch vor der Klemmstelle vorgesehene Kraftabbaustrecken verhindert werden. Da die feststehende Klemmvorrichtung in der Regel Bestandteil des Messsystems ist, soll deren Gewicht möglichst niedrig gehalten werden. Die Massenträgheit des Messsystems hat einen wesentlichen Einfluss auf die Messgenauigkeit des Prüfgerätes. Die Zuführung der für das Öffnen und Schliessen der Klemmvorrichtung erforderlichen Energie darf das Messsystem des Gerätes nicht beeinflussen. Die Erfüllung aller dieser Anforderungen ist insbesondere bei hydraulisch oder pneumatisch betätigten Klemmvorrichtungen mit Problemen verbunden.

Um die aufgezählten Anforderungen zu erfüllen, sind bekannte, handbetätigte Zugfestigkeitsprüfgeräte und Universalprüfmaschinen mit den unterschiedlichsten Klemmsystemen ausgerüstet. Bei allen diesen Geräten wird das Prüfgut von Hand in die geöffneten Klemmvorrichtungen eingelegt. Das Schliessen der Klemmvorrichtungen, d.h. das Andrücken der beweglichen gegen die feste Klemmfläche erfolgt durch Betätigen einer Gewindespindel oder über pneumatische oder hydraulische Zylinder.

Es sind auch Systeme bekannt, bei denen die Klemmkraft durch Federkraft aufgebracht wird. Bekanntgewordene selbstspannende Klemmvorrichtungen arbeiten mit Hebelübersetzungen. Ausserdem sind sogenannte Scherenklemmen und Exzenterklemmen in Gebrauch; bei letzteren wird eine exzentrisch gelagerte, federbelastete, schwenkbare Walze gegen eine feststehende Fläche gedrückt.

Für sehr hohe Klemmkräfte werden Keilklemmvorrichtungen eingesetzt, bei denen zwei parallelgeführte, keilförmige Klemmbacken in einem massiven Gehäuse in einer keilförmigen Führung federbelastet und längsverschiebbar angeordnet sind. Durch die Federbelastung wird eine Anfangsklemmung des Prüfguts erzeugt. Bei Zugbelastung entsteht eine der Zugkraft proportionale Klemmkraft. Durch den gewählten Keilwinkel wird das Zugkraft-/Klemmkraftverhältnis festgelegt. Bei einigen pneumatisch schliessenden Klemmsystemen sind Lösungen bekanntgeworden, bei denen innerhalb der Messstrecke unmittelbar vor den Klemmstellen Reibkörper angebracht sind. Auf diesen Reibkörpem, die zylinder- oder zykloidenförmig ausgebildet sind und einen Umschlingungswinkel von 90° bis 180° aufweisen, wird die im Prüfgut herrschende Zugkraft infolge Seilreibung stark abgebaut. Die Schliesskraft der beiden Klemmvorrichtungen kann dadurch im gleichen Masse verringert werden.

An die Klemmsysteme, die an automatisch arbeitenden Prüfgeräten zum Einsatz kommen, werden zusätzliche Anforderungen gestellt. So soll das automatische Einlegen des Prüfguts und das ebenfalls automatische Entfernen der Reste des Prüfguts nach dessen Bruch gewährleistet sein. Der vorgesehene Messbereich sollte, wenn immer möglich, mit nur einem Kraftmesssystem und mit einem Minimum an auswechselbaren Klemmvorrichtungen abgedeckt werden können.

Die Klemmvorrichtungen automatischer Zugprüfgeräte bis zu einer Prüflast von ca. 5000 Newton sind überwiegend pneumatisch betätigt. Zur Kraftübertragung sind Lösungen bekannt geworden, bei denen Membran-, Rollmembran- und Kolbenzylinder zur Anwendung kommen. Bei einigen dieser Klemmsysteme ist es möglich, den Klemmendruck an das Prüfgut anzupassen, wobei die Druckanpassung über eine aufwendige, elektronische Druckregelung erfolgt. Einige dieser Klemmsysteme sind zusätzlich mit festeingebauten Kraftabbau-Einrichtungen, mit einem Umschlingungswinkel von 90° bis 180° und/oder mit in die Messstrecke einschwenkbaren, zylindrischen Abbaukörpern versehen.

Es ist auch bekannt, Umschlingungswinkel bis zu 360° vorzusehen, was durch hintereinander angeordnete 90° beziehungsweise 180° Umlenkzylinder realisiert wird. Allen diesen Lösungen haftet der Mangel an, dass zum Aufbau des erforderlichen Klemmendruckes von einer externen Quelle Energie in Form von Druckluft zugeführt werden muss. Der Einsatz dieser Energie erfordert einen nicht unbeträchtlichen Aufwand in Form von elektronischer Soft- und Hardware sowie leistungsfähige Pneumatikventile und eine elektronische Druckregelung.

Alle bekannten automatischen Zugfestigkeitsprüfgeräte benützen für die Dehnungsmessung die Abstandsänderung zwischen der festen und der beweglichen Klemmvorrichtung. Universalprüfgeräte verfügen oftmals über eine Zusatzeinrichtung in Form von Schleppzeigem. Diese sind im Abstand der Messlänge angebracht, und erlauben eine sehr genaue Dehnungsmessung.

Die vorliegende Erfindung betrifft eine Klemmvorrichtung für Zugfestigkeitsprüfgeräte oder Universalprüfmaschinen, mit einem Gehäuse, einer festen und einer beweglichen Klemmfläche, zwischen denen ein Klemmspalt zur Aufnahme eines Prüfguts gebildet ist, und mit einem Steuerorgan zum Öffnen und Schliessen des Klemmspalts.

Die erfindungsgemässe Klemmvorrichtung soll eine Anpassung der Klemmkraft oder des Klemmendrucks an das Prüfgut ermöglichen, und zwar durch möglichst einfache, betriebssichere und kostengünstige Mittel. Insbesondere sollen weder eine externe Druckluftquelle noch eine aufwendige elektronische Druckregelung erforderlich sein.

Die gestellte Aufgabe wird erfindungsgemäss dadurch gelöst, dass das Gehäuse drehbar gelagert und durch eine ein Drehmoment erzeugende Zugkraft des Prüfguts in eine Drehbewegung versetzbar ist, und dass Mittel zur Umwandlung dieser Drehbewegung in eine Verschiebung der beweglichen Klemmfläche zur Erzeugung einer zur Zugkraft proportionalen Klemmkraft vorgesehen sind.

Die drehbare Lagerung des Gehäuses eröffnet die Möglichkeit, dass die mit dem Beginn der Prüfung auf das Prüfgut ausgeübte Zugkraft, die wiederum eine Zugkraft auf die Klemmvorrichtung bewirkt, eine Drehbewegung des Gehäuses verursacht. Durch die Mittel zur Umwandlung dieser Drehbewegung in eine Längsverschiebung der beweglichen Klemmfläche wird die Klemmkraft proportional zur Zugkraft erhöht, was eine sehr einfache Anpassung des Klemmendrucks an das Prüfgut darstellt.

Eine erste bevorzugte Ausführungsform der erfindungsgemässen Klemmvorrichtung ist dadurch gekennzeichnet, dass das Steuerorgan zum Offnen und Schliessen des Klemmspalts in Verstellrichtung des Klemmspalts längsverschiebbar ausgebildet ist, und dass die genannten Mittel zur Umwandlung der Drehbewegung auf radial zur Verschiebungsrichtung des Steuerorgans angeordneten Führungen abrollbare erste Kugeln aufweisen.

Eine zweite bevorzugte Ausführungsform der erfindungsgemässen Klemmvorrichtung ist dadurch gekennzeichnet, dass das Steuerorgan durch einen Steuerbolzen gebildet ist, welcher unterschiedlich steile Kegelabschnitte aufweist und über die ersten Kugeln auf eine die bewegliche Klemmfläche tragende Schiebehülse wirkt.

Eine dritte bevorzugte Ausführungsform der erfindungsgemässen Klemmvorrichtung ist dadurch gekennzeichnet, dass die genannten radial angeordneten Führungen durch an einander gegenüberliegenden Flächen an der Schiebehülse und an einem Anschlag angeordnete keilförmige Taschen gebildet sind, und dass die ersten Kugeln an den Wänden dieser keilförmigen Taschen und am Steuerbolzen aufliegen.

Eine weitere bevorzugte Ausführungsform der erfindungsgemässen Klemmvorrichtung ist dadurch gekennzeichnet, dass das Gehäuse rotationssymmetrisch ausgebildet ist und dass Mittel vorgesehen sind, um zur Herabsetzung der Zugbelastung des Prüfguts auf die Klemmvorrichtung die letztere drehwinkelkontrolliert zu rotieren und dadurch das Gehäuse mit dem Prüfgut zu umschlingen.

Die Erfindung betrifft weiter eine Verwendung der letztgenannten bevorzugten Ausführungsform der erfindungsgemässen Klemmvorrichtung an einem automatischen Zugfestigkeitsprüfgerät mit einer festen und einer beweglichen Klemmvorrichtung, zwischen denen eine Prüfstrecke gebildet ist, mit einem die bewegliche Klemmvorrichtung antreibenden Schlitten und mit einer im Prüfgutlauf vor der festen Klemmvorrichtung angeordneten Schere.

Diese Verwendung ist dadurch gekennzeichnet, dass die Einspannlänge des Prüfguts zwischen den Klemmvorrichtungen entsprechend der gewählten Umschlingung des Gehäuses um die Umschlingungslänge verlängert wird, dass nach dem Einlegen des Prüfguts in die Prüfstrecke die bewegliche Klemmvorrichtung geschlossen und durch Nachziehen des Prüfguts von seinem Vorrat und durch Rotation der Klemmvorrichtung in einer ersten Richtung die gewünschte Umschlingung hergestellt wird, und dass anschliessend die feste Klemmvorrichtung geschlossen und unter Rotation der festen Klemmvorrichtung und gleichzeitiger Bewegung des Schlittens in Richtung auf die feste Klemmvorrichtung das Prüfgut unter Einhaltung einer Vorspannung um die feste Klemmvorrichtung gewickelt wird bis die Einspannlänge erreicht ist.

Die in der Regel mehrfache Umschlingung des Gehäuses mit Prüfgut führt zu einer Verschiebung des Einspannpunkts des Prüfguts und damit zu einer Verfälschung der Dehnungsmessung. Dieser Fehler lässt sich aber durch Messung des Gehäusedrehwinkels korrigieren. Wesentlich ist, dass mit den bekannten Zugfestigkeitsprüfgeräten Umschlingungswinkeln von mehr als 360° bisher nicht erreicht werden können.

Nachfolgend wird die Erfindung anhand eines Ausführungsbeispieles und der Zeichnungen näher erläutert; es zeigt:
- Fig. 1: einen Längsschnitt einer erfindungsgemässen Klemmvorrichtung in geöffneter Stellung nach der Linie I-I von Fig. 3,
- Fig. 2: einen Längsschnitt der Klemmvorrichtung in geschlossener Stellung nach der Linie I-II von Fig. 3,
- Fig. 3: einen Querschnitt der Klemmvorrichtung nach der Linie III-IV von Fig. 2,
- Fig. 4: einen Teilschnitt der Klemmvorrichtung mit Kugeln in Raststellung nach der Linie V-VI von Fig. 3,
- Fig. 5: einen Teilschnitt der Klemmvorrichtung mit abgewälzten Kugeln nach der Linie V-VI von Fig. 3,
- Fig. 6: ein Diagramm zur Erläuterung des Kraftangriffs an einer Keilfläche,
- Fig. 7: eine schematische Vorderansicht der Klemmvorrichtung mit einer 90°-Umlenkung des Prüfguts,

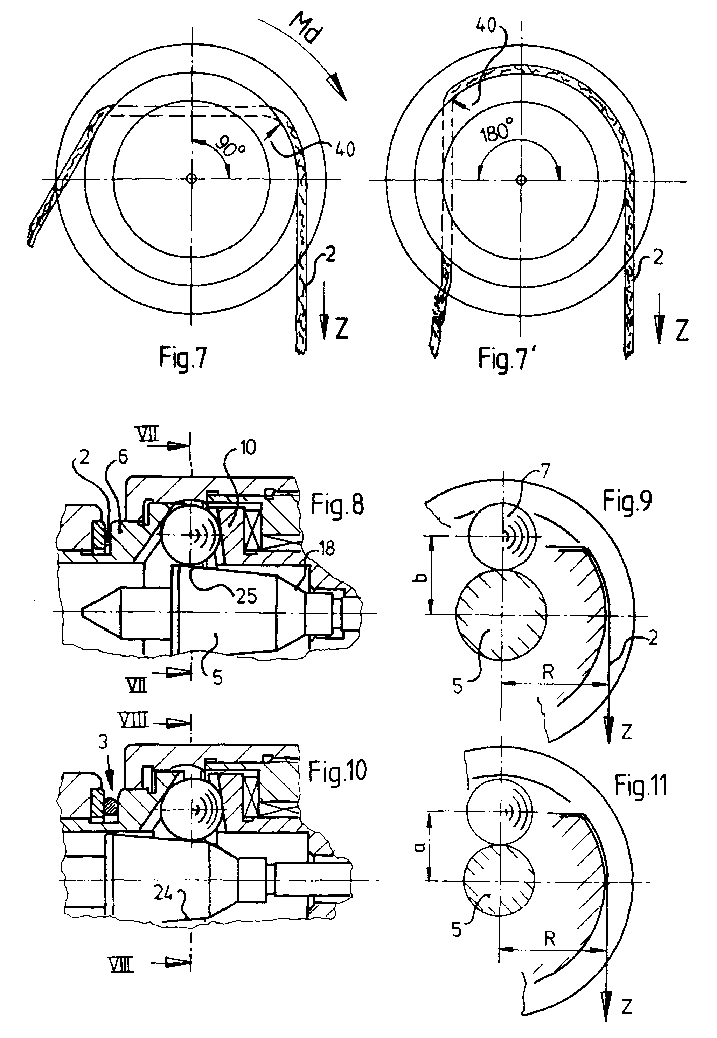

- Fig. 7': eine schematische Vorderansicht der Klemmvorrichtung mit einer 180°-Umlenkung des Prüfguts,

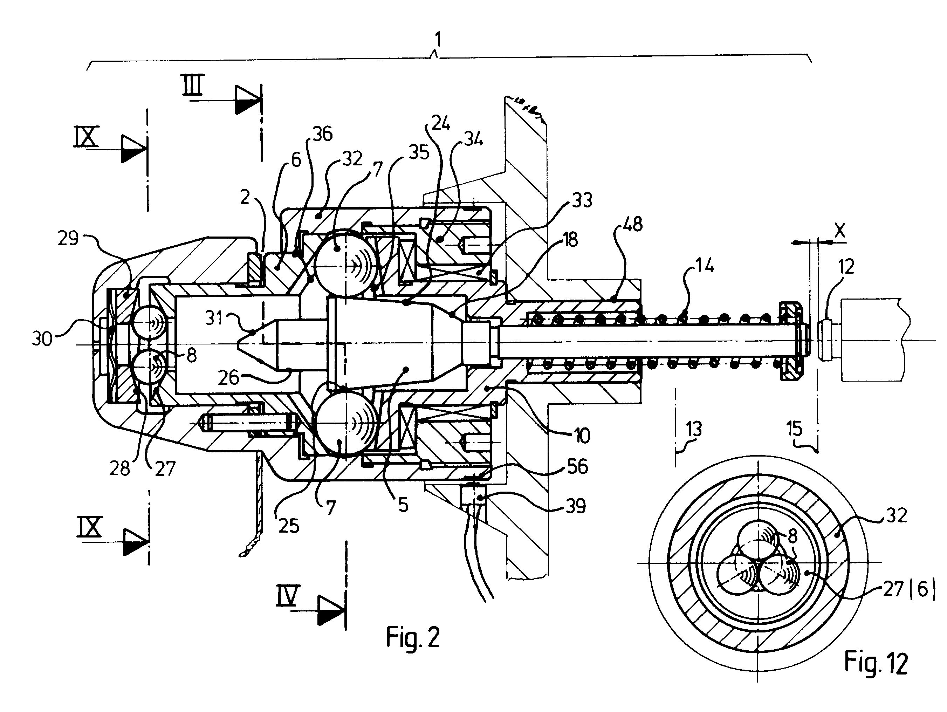

- Fig. 8: ein Detail von Fig. 2 bezüglich der Klemmung von dünnem Prüfgut,
- Fig. 9: einen Schnitt nach der Linie VII-VII von Fig. 8,

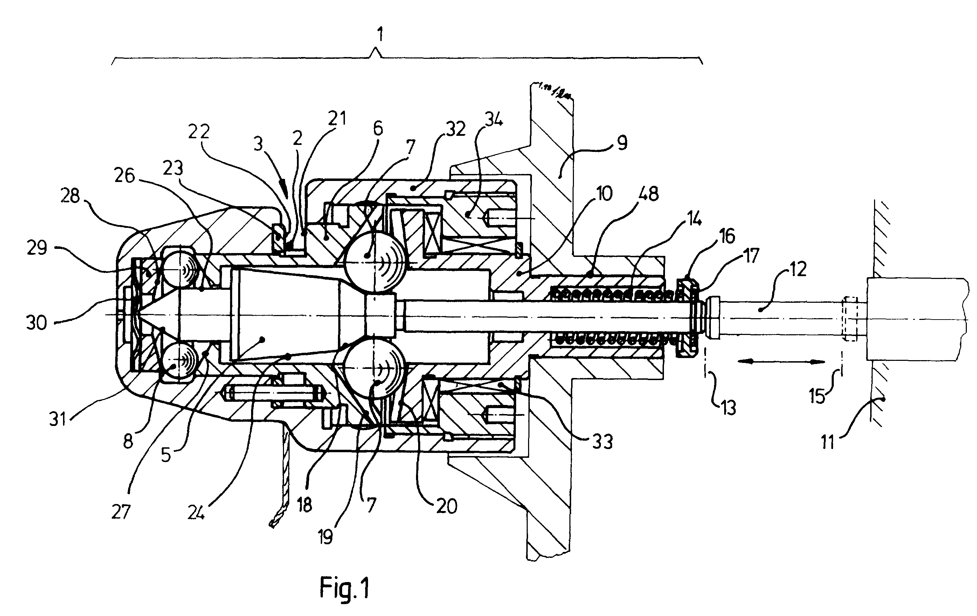

- Fig. 10: ein Detail von Fig. 1 bezüglich der Klemmung von dickem Prüfgut,

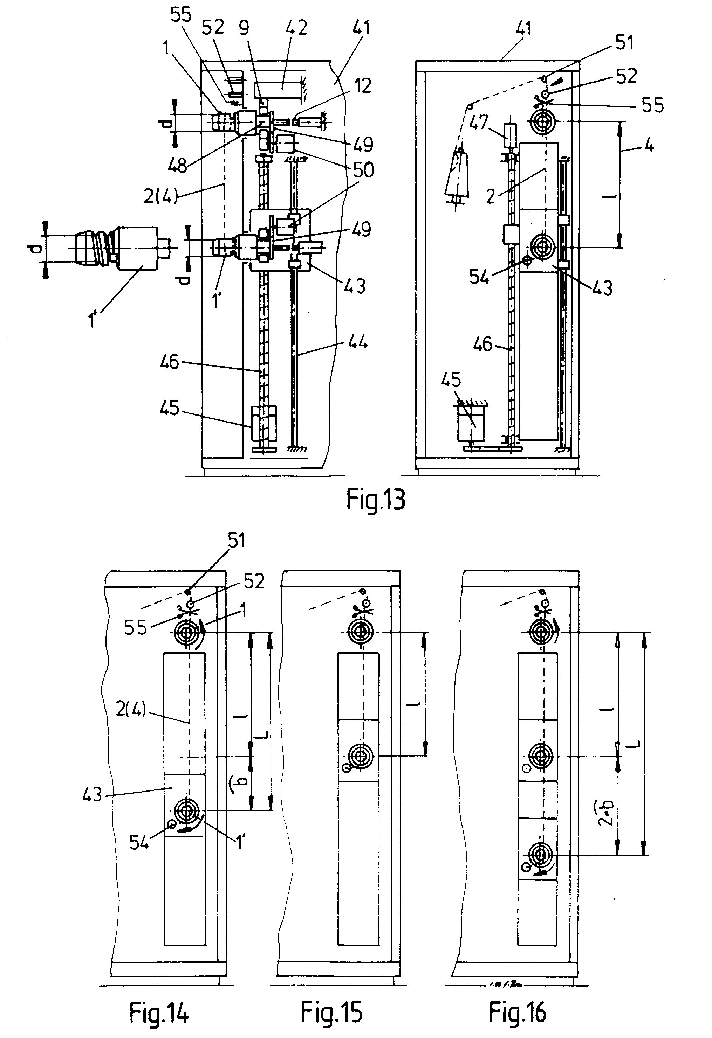

- Fig. 11: einen Schnitt nach der Linie VIII-VIII von Fig. 10,
- Fig. 12: einen Querschnitt durch die Klemmvorrichtung nach der Linie IX-IX von Fig. 2,
- Fig. 13: eine schematische Darstellung eines automatischen Zugprüfgeräts in Vorderansicht und im Schnitt; und
- Fig. 14-16: Diagramme zur Erläuterung der Funktionsweise des Zugprüfgeräts von Fig. 13.

Die in den Figuren 1 bis 12 dargestellte Klemmvorrichtung ist zur Verwendung an einem Zugprüfgerät vorgesehen. Zugprüfgeräte weisen bekanntlich eine Einspannvorrichtung für das Prüfgut mit einer oberen und einer unteren Klemmvorrichtung auf, von denen die eine zur Aufbringung der Zugbelastung beweglich ist. In der Regel ist die obere, feststehende Klemmvorrichtung mit einem Kraftmesssystem und die untere Klemme mit einem beweglichen Schlitten eines Belastungssystems verbunden. Die obere Klemmvorrichtung ist mit dem Bezugszeichen 1 und die mit der oberen Klemmvorrichtung identische untere ist mit 1' bezeichnet (Fig. 13), das Prüfgut mit dem Bezugszeichen 2 und der Klemmspalt mit dem Bezugszeichen 3.

Bei der in Fig. 1 geöffnet und in Fig. 2 geschlossen dargestellten oberen Klemmvorrichtung 1 ist das Prüfgut 2 durch eine nicht dargestellte Zuführeinrichtung in den Klemmspalt 3 und mit einer 90° Umlenkung in eine vertikal verlaufende Prüfstrecke 4 (Fig. 13) eingelegt. Die an der Klemmvorrichtung 1 angreifenden Zugkräfte werden über einen Träger 9, mit dem eine Hohlwelle 10 über Zapfen 48 fest verbunden ist, auf das Kraftmesssystem (nicht dargestellt) übertragen. Der Klemmspalt 3 ist durch zwei Klemmflächen 21 und 22 gebildet.

Das Öffnen und Schliessen des Klemmspaltes 3 erfolgt durch einen Steuerbolzen 5, eine Schiebehülse 6 und Kugeln 7 und 8, wobei der Steuerbolzen 5 durch einen in einer Halterung 11 des Prüfgeräts gelagerten Betätigungsbolzen 12 in axialer Richtung verschoben wird. Der Betätigungsbolzen 12 ist zwischen zwei Endlagen 13 und 15 verschiebbar. In der in Fig. 1 dargestellten geöffneten Stellung der Klemmvorrichtung 1 ist der Betätigungsbolzen 12 bis zur Endlage 13 ausgefahren und hat dabei den Steuerbolzen 5 gegen den Druck einer Rückstellfeder 14 in die Öffnungsstellung verschoben.

In dieser Öffnungsstellung liegen die Kugeln 7, von denen vorzugsweise 5 Stück vorgesehen sind, im Übergangsbereich zwischen einem zylindrischen Teil und einem steilen Kegelabschnitt 18 des Steuerbolzens 5 am Steuerbolzen 5 an und liegen dabei auf einem Kreis geringen Durchmessers. Dadurch ist zwischen der Hohlwelle 10 und der Schiebehülse 6 ein relativ kleiner Abstand gebildet. Die Kugeln 8, von denen vorzugsweise 3 Stück vorgesehen sind, liegen im Bereich der Spitze des Steuerbolzens 5 im Übergangsbereich zwischen einem zylindrischen Teil 26 und einem sich verengenden Kegelteil 31 des Steuerbolzens 5 an diesem an und liegen dabei auf einem Kreis relativ grossen Durchmessers. Dadurch ist zwischen der Schiebehülse 6 und dem stirnseitigen Ende des Gehäuses 32 der Klemmvorrichtung 1 ein relativ grosser Abstand gebildet. Oder mit anderen Worten, die Schiebehülse 6, welche eine die eine Klemmfläche 21 bildende Flanke aufweist, ist im Gehäuse 32 nach hinten geschoben, so dass die Klemmfläche 21 von der am Gehäuse 32 angearbeiteten Klemmfläche 22 einen Abstand aufweist und somit der Klemmspalt 3 geöffnet ist.

Wenn der Betätigungsbolzen 12 in die Ausgangslage 15 zurückgezogen wird, übernimmt die zuvor gespannte Druckfeder 14 den Schliessvorgang der Klemmvorrichtung 1. Zur Vermeidung von Kraftmessfehlern durch Reibungskräfte weist der Betätigungsbolzen 12 in der Ausgangslage 15 einen Abstand X vom Steuerbolzen auf (Fig. 2). Die Druckfeder 14 überträgt ihre Kraft über eine Stützscheibe 16 und einen Sicherungsring 17 auf den Steuerbolzen 5 und verschiebt diesen nach rechts. Der steile Kegelabschnitt 18 auf dem Steuerbolzen 5 verschiebt die Kugeln 7 in dem durch schräg verlaufenden keilförmige Taschen 19, 20 zwischen Schiebehülse 6 und Steuerbolzen 5 gebildeten, keilförmigen Schlitz nach aussen. Dadurch wird die Schiebehülse 6 nach rechts verschoben und der Klemmspalt 3 solange verengt, bis das Prüfgut 2 durch die Klemmfläche 21 der Schiebehülse 6 gegen die Klemmfläche 22 des Klemmrings 23 gepresst wird. Der auf diese Weise aufgebaute Klemmdruck ist von der Dicke des Prüfguts 2 abhängig.

Ist kein oder nur sehr feines Material eingelegt, wird der Steuerbolzen 5 durch die Kraft der Druckfeder 14 soweit nach rechts verschoben bis die Klemmflächen 21 und 22 mit geringem Druck gegeneinander gepresst werden und die Berührungspunkte 25 der Kugeln 7 nahe dem grössten Durchmesser des flachen Kegelabschnitts 24 des Steuerbolzens 5 zu liegen kommen (Fig. 2). Ist im Klemmspalt 3 jedoch dickeres Prüfgut 2 eingelegt, wird durch kürzere Verschiebewege die Druckfeder 14 weniger entlastet, was eine höhere Ausgangs-Klemmkraft zur Folge hat. Die Dicke des Prüfguts 2 wird dadurch begrenzt, dass bei geschlossener Klemme (Fig. 2) die Kugeln 7 auf dem flachen Kegelteil 24 des Steuerbolzens 5 aufliegen müssen. Durch die unterschiedliche Entlastung der Druckfeder 14 wird eine der Dicke des Prüfguts 2 angepasste Ausgangsklemmkraft erreicht.

Bei Schliessbeginn steht die grösste Kraft der Feder 14 zur Verfügung, die dazu benutzt wird, die Kugeln 7 längs des steilen Kegelabschnitts 18, in die schräg verlaufenden keilförmigen Taschen 19, 20 zu schieben. Der Klemmspalt 3 schliesst sich schnell und in diesen eingelegtes dickeres Prüfgut 2 wird vorverdichtet. Kommen nach weiterer Verschiebung des Steuerbolzens 5 die Kugeln 7 auf der flachen Kegelfläche 24 zu liegen, werden diese auf Grund des geringeren Kegelwinkels, trotz teilweise entspannter Feder 14, mit erhöhter Kraft nach aussen gedrückt, bis die Klemmfläche 21 der Schiebehülse 6 das Prüfgut 2 mit dem für die Materialdicke erforderlichen Klemmdruck zusammenpresst.

Bei geöffnetem Klemmspalt 3 liegen die auf dem zylindrischen Teil 26 des Schiebebolzens 5 aufliegenden Kugeln 8 zwischen den trichterförmigen Stirnflächen 27, 28 der Schiebehülse 6 beziehungsweise der Druckscheibe 29. Eine Wellenfeder 30 drückt die Kugeln 8 in den durch die trichterförmigen Stirnflächen 27, 28 gebildeten Spalt. Sie sichert die Zentrierung der Kugeln 8 und überbrückt Toleranzen und Wegüberschneidungen beim Verschieben der Schiebehülse 6 und des Steuerbolzens 5. Mit Beginn der Verschiebung des Steuerbolzens 5 aus der in Fig. 1 dargestellten Position nach rechts und Einsetzen der Verschiebung der Schiebehülse 6 nach links, werden die Kugeln 8 zwischen den trichterförmigen Stirnflächen 27, 28, entlang des Kegelteils 31 des Steuerbolzens 5 solange nach innen verschoben bis sie aneinander anliegen (Fig. 12).

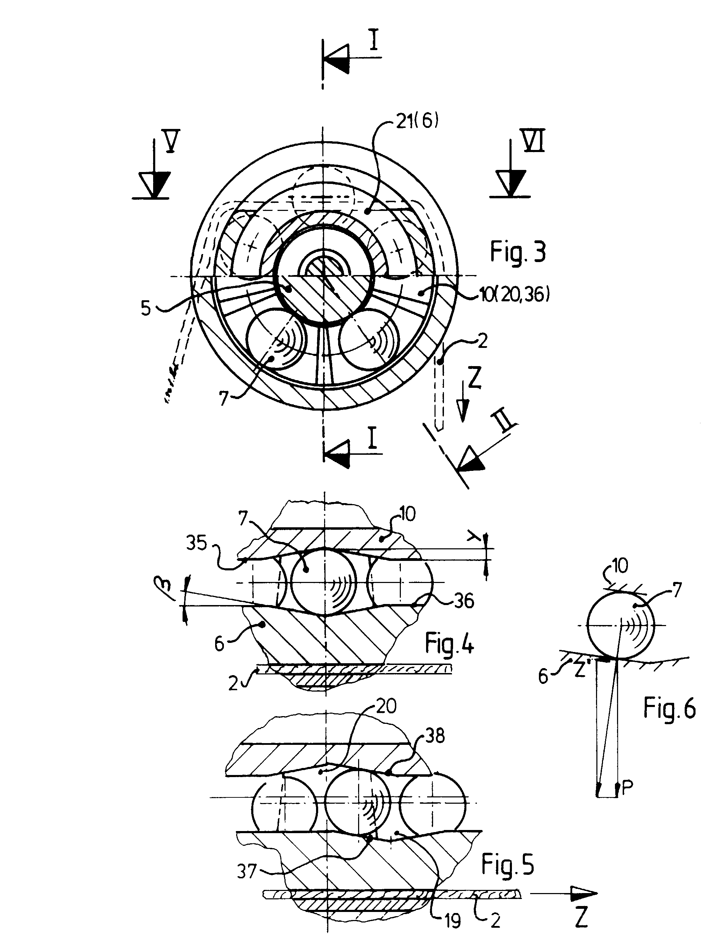

Anhand der Figuren 3 bis 11 sollen nun einige Details bezüglich der bei der Zugprüfung des Prüfguts 2 auftretenden Kräfte erläutert werden: Mit Beginn der Zugprüfung wird auf das im Klemmspalt 3 eingeklemmte Prüfgut 2 eine Zugkraft Z (Fig. 3) ausgeübt. Da die Klemmvorrichtung 1 mit Ausnahme des Steuerbolzens 5 auf der feststehenden Hohlwelle 10 mittels eines in eine Führungshülse 34 eingepressten Axial-Radial-Nadellagers 33 (Fig. 2) schwenkbar gelagert ist, bewirkt das aus der Zugkraft Z und dem Radius R (Fig, 9, 11) resultierende Drehmoment Md (Fig. 7) eine Drehbewegung der schwenkbar gelagerten Teile der Klemmvorrichtung 1, wobei das Nadellager 33 alle auftretenden Axial- und Radialkräfte aufnimmt.

Wie schon erwähnt wurde, sind die Stirnflächen 35 und 36 der Hohlwelle 10 bzw. der Schiebehülse 6 trichterförmig ausgebildet. Diese trichterförmigen Sfirnflächen 35, 36 weisen eine der Anzahl der Kugeln 7 entsprechende Anzahl einander gegenüberliegender keilförmiger Taschen 20 bzw. 19 mit Keilflächen 38 bzw. 37 (Fig. 4, 5) auf, wobei der Keilwinkel β (Fig. 4) in beiden Taschenhälften jeweils gleich ist. Die Neigungswinkel der keilförmigen Taschen 19 und 20 zur Längsachse entsprechen den Winkeln der jeweiligen Stirnfläche 36 bzw. 35.

Durch die Axialkraft der Wellenfeder 30, die von der Druckscheibe 29 über die Kugeln 8 auf die Schiebehülse 6 übertragen wird (Fig. 2), werden die Kugeln 7 ständig in den tiefsten Punkt der keilförmigen Taschen 19, 20 (Raststellung) gedrückt (Fig. 4). Die durch die Zugkraft Z verursachte Drehbewegung des Gehäuses 32 bewirkt, dass die Kugeln 7 an den Keilflächen 37 und 38 der keilförmigen Taschen 19, 20 abwälzen, wodurch die Hohlwelle 10 und die Schiebehülse 6 auseinandergespreizt werden (Fig. 4 - 6). Diese Spreizkraft ist proportional der angreifenden Zugkraft Z und wird als Klemmkraft P auf das Prüfgut 2 übertragen. Die Spreizung kann maximal 2 mal die Taschentiefe y (Fig. 4) betragen. Durch Veränderung des Keilwinkel β kann das Übersetzungsverhältnis Zugkraft Z zu Klemmkraft P in weiten Grenzen variiert werden.

In der Praxis werden lineare Keilflanken genügen. Das Zugkraft-/Klemmkraftverhältnis kann jedoch mit nichtlinearen, beispielsweise bogenförmigen (konvexen oder konkaven) Keilflanken zusätzlich beeinflusst werden. Eine weitere jedoch geringere Beeinflussung kommt dadurch zustande, dass die Kugeln 7 bei der Prüfung von dünnem und dickem Prüfgut 2 auf unterschiedlichen Radien b/R (Fig. 8, 9) bzw. a/R (Fig. 10, 11) abwälzen.

Zur Korrektur des bei der Prüfung ermittelten Dehnungsmesswertes wird die Drehbewegung des Gehäuses 32 berührungslos gemessen. Gemäss Fig. 2 erfolgt der Abgriff durch einen am Träger 9 (Fig. 1) eingebauten Ablesekopf 39 und einen am Gehäuse 32 eingelassenen Inkrementring 56.

Nach dem Bruch des Prüfguts 2 entfällt das äussere Drehmoment Md. Der Einfluss der Wellenfeder 30, die noch anstehende Klemmkraft P und die Pressung des Prüfguts 2 bewirken das Zurückdrehen des Gehäuses 32 in die Raststellung. Diese ist erreicht, wenn die Kugeln 7 im tiefsten Punkt der keilförmigen Taschen 19, 20 aufliegen (Fig. 4). Anschliessend wird durch Ausfahren des Betätigungsbolzens 12 von der Ausgangslage 15 auf die Endlage 13 (Fig. 1) der Klemmspalt 3 geöffnet und der Rest des Prüfguts 2 kann entfernt werden.

Während der durch den Betätigungsbolzen 12 bewirkten Verschiebung des Steuerbolzens 5 nach links laufen die folgenden Vorgänge ab:
- Die Rückstellfeder 14 wird erneut gespannt.
- Die Kugeln 7 werden unter dem Einfluss der Wellenfeder 30 auf den flachen Kegelabschnitt 24 des Steuerbolzens 5 gedrückt.
- Mit dem Auftreffen der Spitze des Kegelteils 31 auf die Kugeln 8, welche die in Fig. 12 dargestellte Position einnehmen, werden diese radial nach aussen gedrückt und verschieben die Schiebehülse 6 nach rechts. Durch diese Verlagerung der Schiebehülse 6 wird der Klemmspalt 3 geöffnet.
- Mit dem Auftreffen der Spitze des Kegelteils 31 auf die Kugeln 8 kommt der steile Kegelabschnitt 18 in den Bereich der Kugeln 7 zu liegen, sodass diese in den keilförmigen Taschen 19, 20, auf dem steilen Kegelabschnitt 18 aufliegend. in die in Fig. 1 dargestellte Ausgangslage zurückgeschoben werden.

In den Fig. 7 und 7' ist angedeutet, dass die Gehäuseaussenseite zum Spannungsabbau durch Ausnützung der Seilreibung benutzt werden kann. In Fig. 7 ist eine 90° und in Fig. 7'eine 180° Umlenkung dargestellt. Die Übergangsstelle 40 kann als Radius oder Zykloidenast ausgebildet werden. In Fällen, bei denen eine 90° oder 180° Umlenkung nicht ausreicht, können Umschlingungen von z.B. 270°; 360° oder mehr, realisiert werden. Ein dafür ausgerüstetes Zugprüfgerät ist in den Fig. 13 - 16 dargestellt.

Das in der linken Hälfte von Fig. 13 im Längsschnitt und in der rechten Hälfte in einer Vorderansicht vereinfacht dargestellte Zugprüfgerät besteht aus einem Gehäuse 41, einem Messystem 42, dem Träger 9 (Fig. 1), der oberen und unteren Klemmvorrichtung 1 bzw. 1', einem die Klemmvorrichtung 1' tragenden Schlitten 43, der durch eine Säule 44 geführt ist und über einen Antrieb 45 und eine Spindel 46 verschoben wird. Der mit dem Bezugszeichen L bezeichnete Klemmenabstand wird durch einen Drehgeber 47 überwacht.

Die Zapfen 48 der Hohlwelle 10 (Fig. 1) sind im Träger 9 und im Schlitten 43 drehbar gelagert und über Zahnräder 49 mit einem Servomotor 50 verbunden. Um den Einlegevorgang zu erleichtern, sind die Klemmspalte 3 vertikal gerichtet montiert, so dass sie parallel zur Prüfstrecke 4 liegen. Eine nicht dargestellte Zuführeinrichtung übernimmt das Prüfgut 2 zwischen einem Umlenkpunkt 51 und einer Garnbremse 52 und legt es in die Klemmvorrichtungen 1 und 1' ein. Der Klemmenabstand L beträgt Einspannlänge 1 plus die Umschlingungslänge 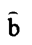 der gewählten Umschlingung, also z.B. für eine 360° Umschlingung Durchmesser d des Gehäuses 32 am Ort des Klemmspalts 3 mal π (Fig. 13 linke Hälfte und Fig. 14).

Wenn die Klemmvorrichtung 1' geschlossen und das Prüfgut 2 festgeklemmt ist, wird durch den Servomotor 50 die Klemmvorrichtung 1' im Uhrzeigersinn um den vorgegebenen Umschlingungswinkel gedreht. Eine linksgängige gewindeförmige Rille auf der unteren Klemmvorrichtung 1' und eine rechtsgängige auf der oberen Klemmvorrichtung 1 kann den Aufwickelvorgang erleichtern. Der Aufwickelvorgang erfolgt mit der jeweils an der Gambremse 52 eingestellten Gambremsung. Das aus der Klemmvorrichtung 1' hängende Garnende wird von einer Absaugdüse 54 abgesaugt.

Nun schliesst die obere Klemmvorrichtung 1, und die Schere 55 trennt das Prüfgut 2 (Fig. 14). Der Schlitten 43 fährt nach oben zurück und gibt dadurch Material frei, das von der Klemmvorrichtung 1 im Gegenuhrzeigersinn aufgewickelt wird. Die momentane Garnspannung wird vom Kraftmesssystem 42 kontinuierlich erfasst und durch entsprechende Ansteuerung der Spindel 46 auf dem Sollwert gehalten. Nach Erreichung der vorgesehenen Umschlingung und damit der Einspannlänge 1 kann der Prüfvorgang eingeleitet werden (Fig. 15). Mit dem Bruch des Prüfguts 2 wird die Absaugdüse 54 in Betrieb gesetzt, die Klemmen werden geöffnet und der Garnrest wird während des Schlittenrücklaufs und unter Zurückdrehen der Klemmvorrichtung 1' abgesaugt. Der folgende Einlegevorgang kann durch Abwickeln des Prüfguts von der oberen Klemmvorrichtung 1 erleichtert werden.

Eine Variante des Aufwickelvorgangs ist in Fig. 16 dargestellt. Hier entspricht der mit dem Bezugszeichen L bezeichnete Klemmenabstand nach dem Einlegen des Prüfguts der Einspannlänge 1 plus 2 mal der Bogenlänge 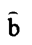 der gewählten Umschlingung. Die Klemmvorrichtungen 1 und 1' schliessen gleichzeitig und die Schere 55 trennt das Prüfgut 2. Anschliessend fährt der Schlitten 43 unter Linksdrehung der oberen und Rechtsdrehung der unteren Klemmvorrichtung 1 bzw. 1' garnspannungsüberwacht auf den Abstand 1 zurück.

Die in den Figuren 13 bis 16 dargestellten Varianten mit Umschlingungen von mehr als 180° ergeben genaue Kraftmesswerte, wobei aber die Dehnungsmessung verfälscht ist. Dieser Fehler lässt sich durch den Abgriff des Gehäusedrehwinkels berechnen und entsprechend korrigieren. Dadurch nicht korrigiert ist jedoch der negative Dehnungsfehler infolge kleinerer Dehnungswerte auf der Abbaustrecke vor dem Klemmspalt und der positive Dehnungsfehler, der dadurch entsteht, dass sich die Zugspannung im Prüfgut vom Höchstwert beim Eintritt in den Klemmspalt erst innerhalb der Klemmstrecke auf null reduziert. Diese beiden Dehnungsfehler kompensieren sich aber teilweise und sind bei Bruchdehnungswerten bis ca. 5% und kurzen Abbaustrecken vernachlässigbar.

Genaue Dehnungswerte oder Umrechnungsfaktoren sind durch Messungen mit unterschiedlichen Einspannlängen 1 von zum Beispiel 250 und 500 mm oder durch Dehnungsabgriff mit Schleppzeigern erreichbar. Die erreichbaren Umschlingungswinkel erlauben die Prüfung von hochfesten, geölten oder gewachsten Industriezwirnen sowie von druckempfindlichen Garnen.

## Patentansprüche

1. Klemmvorrichtung für Zugfestigkeitsprüfgeräte oder Universalprüfmaschinen, mit einem Gehäuse (32), einer festen und einer beweglichen Klemmfläche (22, 21), zwischen denen ein Klemmspalt (3) zur Aufnahme eines Prüfguts (2) gebildet ist, und mit einem Steuerorgan zum Öffnen und Schliessen des Klemmspalts (3), dadurch gekennzeichnet, dass das Gehäuse (32) drehbar gelagert und durch eine ein Drehmoment (Md) erzeugende Zugkraft (Z) des Prüfguts (2) in eine Drehbewegung versetzbar ist, und dass Mittel (5, 6, 7) zur Umwandlung dieser Drehbewegung in eine Verschiebung der beweglichen Klemmfläche (21) zur Erzeugung einer zur Zugkraft (Z) proportionalen Klemmkraft (P) vorgesehen sind.

2. Klemmvorrichtung nach Anspruch 1, dadurch gekennzeichnet, dass das Steuerorgan zum Öffnen und Schliessen des Klemmspalts (3) in Verstellrichtung des Klemmspalts (3) längsverschiebbar ausgebildet ist, und dass die genannten Mittel zur Umwandlung der Drehbewegung auf radial zur Verschiebungsrichtung des Steuerorgans angeordneten Führungen (19, 20) abrollbare erste Kugeln (7) aufweisen.

3. Klemmvorrichtung nach Anspruch 2, dadurch gekennzeichnet, dass das Steuerorgan durch einen Steuerbolzen (5) gebildet ist, welcher unterschiedlich steile Kegelabschnitte (18, 24) aufweist und über die ersten Kugeln (7) auf eine die bewegliche Klemmfläche (21) tragende Schiebehülse (6) wirkt.

4. Klemmvorrichtung nach Anspruch 3, dadurch gekennzeichnet, dass die genannten radial angeordneten Führungen durch aneinander gegenüberliegenden Flächen an der Schiebehülse (6) und an einem Anschlag angeordnete keilförmige Taschen (19, 20) gebildet sind, und dass die ersten Kugeln (7) an den Wänden dieser keilförmigen Taschen (19, 20) und am Steuerbolzen (5) aufliegen.

5. Klemmvorrichtung nach Anspruch 3 oder 4, dadurch gekennzeichnet, dass das Gehäuse (32) ein kappenartiges Vorderteil mit einer dieses nach vorne abschliessenden Frontfläche aufweist, welches die feste Klemmfläche (22) trägt und in welchem die Schiebehülse (6) axial verschiebbar gelagert ist.

6. Klemmvorrichtung nach Anspruch 5, dadurch gekennzeichnet, dass zwischen der genannten Frontfläche und der Stirnflanke der Schiebehülse (6) radiale Führungen (28, 27) für zweite Kugeln (8) gebildet sind.

7. Klemmvorrichtung nach Anspruch 6, dadurch gekennzeichnet, dass der Steuerbolzen (5) an seinem der genannten Frontfläche zugekehrten Ende mit einem sich verengenden Kegelteil (31) versehen ist, und dass die zweiten Kugeln (8) bei der den Klemmspalt (3) öffnenden Verschiebung des Steuerbolzens (5) unter Verschiebung in den radialen Führungen (27, 28) nach aussen auf dem Kegelteil (31) abrollen.

8. Klemmvorrichtung nach Anspruch 7, dadurch gekennzeichnet, dass die genannten radialen Führungen durch an einander gegenüberliegenden Flächen an der Innenseite der genannten Frontfläche und an der Stirnflanke der Schiebehülse (6) angeordnete trichterförmige Stirnflächen (28, 27) gebildet sind, von denen die an der Innenseite der Frontfläche angeordneten in Axialrichtung der Steuerbolzens (5) federnd gelagert sind.

9. Klemmvorrichtung nach einem der voranstehenden Ansprüche, dadurch gekennzeichnet, dass das Gehäuse (32) rotationssysmmetrisch ausgebildet ist und dass Mittel (49, 50) vorgesehen sind, um zur Herabsetzung der Zugbelastung des Prüfguts (2) auf die Klemmvorrichtung (1, 1') die letztere drehwinkelkontrolliert zu rotieren und dadurch das Gehäuse (32) mit Prüfgut (2) zu umschlingen.

10. Klemmvorrichtung nach Anspruch 9, dadurch gekennzeichnet, dass die genannten Mittel zur Rotation der Klemmvorrichtung (1, 1') durch einen Servomotor (50) gebildet sind.

11. Verwendung der Klemmvorrichtung nach einem der voranstehenden Ansprüche an einem automatischen Zugfestigkeitsprüfgerät mit einer festen und einer beweglichen Klemmvorrichtung (1, 1'), zwischen denen eine Prüfstrecke (4) gebildet ist, mit einem die bewegliche Klemmvorrichtung (1') antreibenden Schlitten (43) und mit einer im Prüfgutlauf vor der festen Klemmvorrichtung (1) angeordneten Schere (55); dadurch gekennzeichnet, dass die Einspannlänge (1) des Prüfguts (2) zwischen den Klemmvorrichtungen (1, 1') entsprechend einer gewählten Umschlingung des Gehäuses (32) um die Umschlingungslänge ( 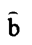 ) verlängert wird, dass nach dem Einlegen des Prüfguts (2) in die Prüfstrecke (4) die bewegliche Klemmvorrichtung (1') geschlossen und durch Nachziehen des Prüfguts (2) von seinem Vorrat und Rotation der Klemmvorrichtung in einer Richtung die gewünschte Umschlingung hergestellt wird, und dass anschliessend die feste Klemmvorrichtung (1) geschlossen, die Schere (55) betätigt und unter Rotation der festen Klemmvorrichtung (1) in der Gegenrichtung und gleichzeitiger Bewegung des Schlittens (43) in Richtung auf die feste Klemmvorrichtung (1) das Prüfgut (2) unter Einhaltung einer Vorspannung um die feste Klemmvorrichtung (1) gewickelt wird bis die Einspannlänge (1) erreicht ist.

12. Verwendung der Klemmvorrichtung nach einem der Ansprüche 1 bis 10 an einem automatischen Zugfestigkeitsprüfgerät mit einer festen und einer beweglichen Klemmvorrichtung (1, 1'), zwischen denen eine Prüfstrecke (4) gebildet ist, mit einem die bewegliche Klemmvorrichtung (1') antreibenden Schlitten (43) und mit einer im Prüfgutlauf vor der festen Klemmvorrichtung (1) angeordneten Schere (55), dadurch gekennzeichnet, dass die Einspannlänge (1) des Prüfguts (2) zwischen den Klemmvorrichtungen (1, 1') entsprechend einer gewählten Umschlingung des Gehäuses (32) um die doppelte Umschlingungslänge (2 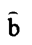 ) verlängert wird, dass nach dem Einlegen des Prüfguts (2) in die Prüfstrecke (4) beide Klemmvorrichtungen (1, 1') geschlossen werden und die Schere (55) betätigt wird, und dass anschliessend die gewünschte Umschlingung durch Rotation der beiden Klemmvorrichtungen (1, 1') in entgegengesetzten Richtungen und gleichzeitiges vorspannungsüberwachtes Zurückfahren des Schlittens (43) hergestellt wird.
